# EUROPEAN PATENT APPLICATION

(11) **EP 2 009 865 A1**
(43) Date of publication of application: **31.12.2008**
(21) Application number: 07290784.3
(22) Date of filing: 25.06.2007
(51) Int. Cl.: H04L 29/06

(54) **Method of providing an access control system**

(71) Applicant: Alcatel Lucent, 75008 Paris (FR)
(72) Inventor: Araujo, José, 91100 Corbeil-Essonnes (FR); Papillon, Serge, 75014 Paris (FR)
(74) Representative: Zinsinger, Norbert

(57) **Abstract**

The invention concerns a method of providing an access control system, and a network node and a computer program product to execute this method. The access control system grants access rights upon resources (15 to 19) within a network (1) to an entity based on access control parameters. On detection of a change in a security ambiance level of the network (1), the access control parameters are modified in real-time in dependence on the change in the security ambiance level of the network (1).

## Description

The present invention relates to a method of providing an access control of a network, and a network node and a computer program product to execute said method.

Security awareness is growing in our societies. We are living in a world in which security status exists for a growing number of domains. We have meteorological security alerts with levels, we have security assessments for some countries in which we may travel given by consulates or travel agencies, some governments even publish a terrorism security status. At work, some areas are considered more secure than others, and guiding security rules are given to employees to tell them what behaviour is considered safe in which environment.

The same goes with the telecommunications field. Security Operation Centres issue security alerts to tell operators that they have a momentary drop in their security features. Some products are marketed to give telecommunications operators an evaluation of the security assurance value of their services (Security Assurance Management solutions). Some European projects, e.g. IST/SEINIT and IST/UBISEC, show ways to take security ambiance factors into account in the set-up of critical communication means (IST = Information Society Technologies; SEINIT = Security Experts Initiative; UBISEC = Ubiquitous Networks with a Secure Provision of Services, Access, and Content Delivery).

Most of today's access control mechanisms and products grants access rights upon resources to entities (persons, programs) based on predefined and static rules. Each type of access control (profile based, role based, Access Control List (= ACL), criteria based, Unix like, etc.) aims at answering the following question: has this entity the right to perform this action upon this resource?

It is the object of the present invention to provide an improved access control for resources within a network.

The object of the present invention is achieved by a method of providing an access control system granting access rights upon resources within a network to an entity based on access control parameters, whereby the method comprises the step of modifying, on detection of a change in a security ambiance level of the network, in real-time the access control parameters in dependence on the change in the security ambiance level of the network. The object of the present invention is further achieved by a network node for providing an access control system granting access rights upon resources within a network to an entity based on access control parameters, whereby that the network node comprises a control unit adapted to modify, on detection of a change in a security ambiance level of the network, in real-time the access control parameters in dependence on the change in the security ambiance level of the network. And the object of the present invention is achieved by a computer program product for providing an access control system granting access rights upon resources within a network to an entity based on access control parameters, whereby the computer program product, when executed by a network node, performs the step of modifying, on detection of a change in a security ambiance level of the network, in real-time the access control parameters in dependence on the change in the security ambiance level of the network.

The security ambiance describes a situation, a state or a level associated with the security in the network or a part of the network, e.g., a specific level of the network. The security ambiance may be characterised by quantifiable measures, e.g., parameterised by measures like intrusions/attacks on the network per time, wherein a weight may be assigned to an attack depending on the severity of the attack. The security ambiance level gives a degree of the security ambiance; for example, a high security ambiance level may express a situation where the security in the network is highly endangered.

Access control parameters may be information/data that give specifications of access rights with respect to an entity trying to access resources of the network. Access control parameters may be entries in an ACL, passwords, group files, etc.).

The present invention takes into account the security ambiance at the access control level or in the access control domain. Thus, the invention provides an ambiance-sensitive access control.

The invention proposes a new method to enforce new access control parameters depending on the security ambiance in the network.

A modification of the access control parameters is done in real-time and automatically, i.e., without a need of a human operator. Therefore, a changed security situation in a network can be answered fast and effectively.

Further advantages are achieved by the embodiments of the invention indicated by the dependent claims.

According to a preferred embodiment of the invention, an operator of the network designs a security policy and provides the network node with access to security policy data specifying the security policy. The security policy specifies for the different network elements what are the data to modify and how to modify them. For instance, the security policy specifies the modifications that are applied to the access control parameters in dependence on the change in the security ambiance level of the network. The security policy or a part of it may have a global significance, i.e., be valid for the whole network. It is also possible that the security policy comprises two or more parts that have only a local significance, so-called local security policies.

One can think of the modifications of the access control parameters that system parameters are modified, but also modifications of application configurations can be considered.

Dependent on the current security ambiance level prevailing in the network, the access control parameters must be modified in a more or less severe manner. If the security ambiance level in the network is poor, i.e., the network security is heavily endangered, the modification of the access control parameters must be such that the resources of the network, such as a data base holding valuable information, cannot be compromised. The present invention provides a method to modify access control parameters in a secured way directly in the managed elements (network elements or applications).

The security policy data corresponding to the security policy may be a translation of the security policy into a set of rules executable by a processor, e.g., a script written in a programming language. The operator may define the security policy on his computer, have the security policy translated into the security policy data and transmit the security policy data to the network node through a wireline/wireless network connection between his computer and the network node.

According to another preferred embodiment of the invention, the network node receives one or more alerts, e.g., alerting notifications or alarm messages, regarding a security threat of the network, e.g. a hacker trying to enter the network system. These alerts may be generated by network agents monitoring the security status in the network, such as an Intrusion Detection System (= IDS) and/or an Intrusion Prevention System (= IPS). The alerts are sent through the network from the network agent to the network node.

The network node deduces from the received one or more alerts an updated security ambiance level of the network. This deduction is based on pre-defined security policy data provided to the access control system, e.g. by an operator of the network. The pre-defined security policy data may specify that, if the updated security ambiance level exceeds a pre-set value, the modification of the access control parameters according to the pre-defined security policy is initiated. Otherwise, if the updated security ambiance level remains below the pre-set value, the access control parameters are not modified.

According to another preferred embodiment of the invention, two or more categories for a classification of the one or more alerts with respect to a severity of the one or more alerts are defined. The definition of those categories may be part of the security policy, e.g., designed by the network operator, and the specific description of the categories may be contained in the security policy data. On the basis of the defined categories, the network node may be able to do a classification of the received one or more alerts.

The invention provides a straightforward method where the alerts can be reduced to simple ambiance states, attacks can be classified in very few categories, orange and red for example, depending on the risk for the system. Depending on this classification, the modification to be performed in the different access control parameters can be also reduced to a few simple modification degrees.

Preferably, the security ambiance level is the result of a correlation of alerts. According to the alerts and their severity, i.e., their category, a security ambiance level is deduced. According to the pre-defined security policy data, an updated security ambiance level is calculated based on a distribution of the one or more alerts in the defined categories. The correlation of alerts and the calculation of the security ambiance level may follow any algorithm, e.g., an algorithm including the number of alerts per time, the type of alerts, etc. Possibly, only one alert can activate the modification process, if the severity of the alert is higher than a pre-configured threshold, while one thousand alerts will not cause any modification if they have all almost a same low severity. The network node will trigger a modification of the access control parameters when the security ambiance level is modified according to a predefined extent.

In a preferred embodiment, the network node determines one or more resources within the network that are affected by the calculated change in the security ambiance level of the network. There may be security-sensitive resources, e.g., a data base with unique or confidential information, that have to be secured when the security ambiance level has deteriorated only little. Other, more robust resources may require a protection only of the security ambiance level has deteriorated for a significant amount, e.g., in case of a severe attack endangering vital network functions. The network node accesses one or more access control lists related to the affected resources and changes in real-time said one or more access control lists to bring the access control lists into conformity with the changed security ambiance level.

According to another preferred embodiment of the invention, the network node modifies in real-time all access control lists of the access control system in a centralised way. The network node accesses all ACLs of the access control system which controls access to the network and modifies the access control parameters held in the ACLs. The centralised modification of the access control lists of the access control system is done according to the change in the security ambiance level of the network, following corresponding specifications of a security policy. Thus, the invention provides an efficient way to modify in a centralised way the ACLs of the system.

Preferably, the network node generates, before it initiates the modification of the access control parameters, a backup of data concerning the current access rights. For instance, the network node makes a backup of a currently valid ACL and stores the backup data in a memory. It is only after creation of this backup of the current access rights that the access rights are modified. Later, the backup is used for restoration of the former access rights: later, when the security ambiance level has reached again the same level as when the backup was created, the backup can be used to re-establish the former state of the access rights.

Thus, the method according to the invention can backup the original files before their modification to restore the system in its normal state. The normal state may be a security state where no severe attacks are encountered, such that the security ambiance level is in its safest possible level. These modifications are made in real-time. The big added value is if a user account of a user of the network resources is compromised, sensitive data are protected by the present solution because this user is no more allowed to read or modify his user account.

Preferably, the control unit of the network node receives one or more alerts regarding a security threat of the network from a network agent. The network agent may be any network unit, or a unit external to the network, which monitors the network with regard to network security threats. For instance, a network agent may be an Intrusion Detection System and/or an Intrusion Prevention System.

These as well as further features and advantages of the invention will be better appreciated by reading the following detailed description of presently preferred exemplary embodiments taken in conjunction with accompanying drawings of which:
- Fig. 1: is a block diagram of a network according to an embodiment of the invention.
- Fig. 2: is a block diagram of the network encountering a network security threat according to an embodiment of the invention.
- Fig. 3: is a diagram of a network node according to an embodiment of the invention.

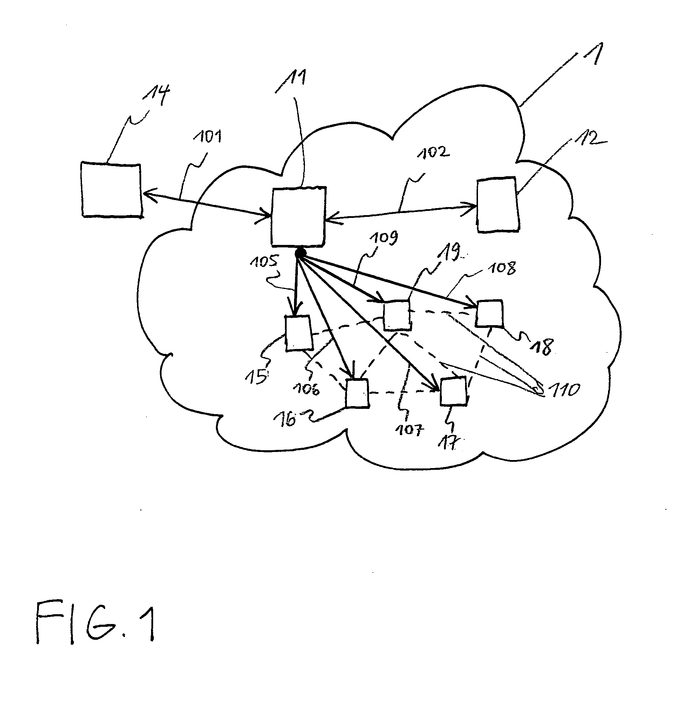

Fig. 1 shows a network 1 with a network node 11 providing a centralised access control, a security agent 12, and network elements 15 to 19 with configured ACLs. The network 1 may comprise one or more telecommunications networks and computer networks, e.g., based on packet-based transmission and/or connection-oriented transmission. For example, the network 1 may comprise a telephone network, e.g. a PSTN or an ISDN-based network, a mobile telephone network like WLAN, and a packet-based multimedia network like the public Internet (PSTN = Public Switched Telephone Network; ISDN = Integrated Services Digital Network; WLAN = Wireless Local Area Network). The network 1 may also be a proprietary network, e.g., a computer network of a university or a company.

The access to the network 1 is managed by an access control system. An entity (user, server, programme, etc.) that wants to access resources (data base, files, services, servers, etc.) of the network is subject to access control executed by the access control system. It is possible that a user wants to access a server of the network 1 by means of an interface, e.g., from a user's terminal. There may be services, e.g., files, offered by the server that may be accessed without any restrictions, so-called public services. Other services/files offered by the server may be restricted to users who have undergone a log-in procedure where the user is assigned a user name and a password. Still other services/files offered by the server may be restricted to the administrator(s) of the network or to users who have a password and who pay a service fee.

The access control system implemented into the network 1 makes sure that only entities with valid and sufficient access rights are allowed to access the respective resources of the network 1. For example, to restrict the access to files in a network, a POSIX ACL may be implemented (POSIX = Portable Operating System Interface).

The network node 11 comprises the functionality according to the invention. The network node 11 is composed of one or several interlinked computers, i.e., a hardware platform, a software platform basing on the hardware platform and several application programs executed by the system platform formed by the software and hardware platform. The functionalities of the network node 11 are provided by the execution of these application programs. The application programs or a selected part of these application programs constitute a computer software product providing an access control service as described in the following, when executed on the system platform. Further, such computer software product is constituted by a storage medium storing these application programs or said selected part of application programs.

The security agent 12 monitors the network for detection of unauthorised attempts to access a resource of the network, e.g., to access a data base of the network. In particular, the security agent monitors the access nodes of the network 1 which provide access to the network 1. The security agent 12 is connected to the network node 11 through a connection 102.

The network elements 15 to 19 may be part of the network elements constituting the network 1. They may be file servers protected by ACLs. It is also possible that the network elements 15 to 19 represent access nodes of the network 1. The network elements 15 to 19 may be telephone switches or access points of a wireless network. In any case, the network elements 15 to 19 are monitored by the security agent 12. The network elements 15 to 19 are connected to each other through the connections 110. In addition, the network elements 15 to 19 are connected to the network node 11 through the connections 105 to 109.

The network node 11 can be accessed by an operator of the network or a provider of the network. The network operator uses a computer 14 to access the network node via a wireline or wireless connection 101. The computer 14 comprises an interface, i.e., a dedicated software programme, for accessing the network node 11 and modifying the settings of the network node 11.

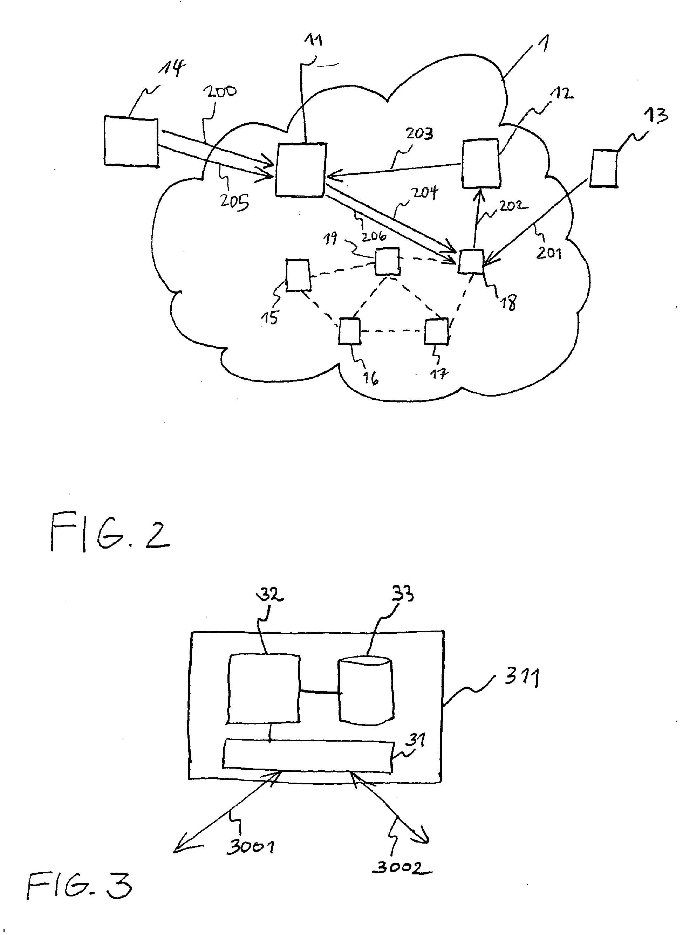

Fig. 2 shows the network 1 comprising the network elements as described with reference to Fig. 1. Fig. 2 shows a scenario presenting a modification of an ACL after an attack tentative has been detected by the security agent 12.

An operator of the network 1 uses an operator's computer 14 to access 200 the network node 11 and to deploy on the network node 11 security policy data specifying a security policy desired by the operator.

A hacker 13 establishes a connection 201 to the network element 18 and tries to enter the network 1 or to access a file stored on the network element 18 without being authorised. The hacker 13 attempts to penetrate the network system starting with a TCP stealth scanning (TCP = Transmission Control Protocol). The security agent 12 monitoring the network elements 15 to 19 detects 202 the attack on the network element 18. The security agent 12 generates an alert comprising an indication about the severity of the detected attack. The security agent 12 transmits the alert in an alert message 203 to the network node 11.

The network node 11 receives the alert message 203 via an interface of the network node and calculates an updated security ambiance level. The calculation of the security ambiance level may take into account alert messages that have been received by the network node 11 during a pre-defined time period, e.g., during the past 10 minutes. It is possible that each alert that is taken into account for the calculation of the security ambiance level is assigned a weight corresponding to the severity of the alert.

The weighting of alert messages and the calculation algorithm of the security ambiance level may be done according to instructions specified by the network operator, e.g., according to a security policy. The network operator may design a security policy and deduce a set of algorithms that represent the security policy in a computer-readable language. Then, the operator transmits the algorithms to the network node 11 where the algorithms are stored in a memory. When the network node 11 is required to calculate a security ambiance level, the network node 11 retrieves the algorithms from the memory and calculates the security ambiance level according to the algorithms.

For example, each incoming alert message that is received by the network node 11 is assigned a severity number between 1 and 10, whereby the weight assigned to the alert is proportional to the severity number. That means that an alert with a severity number of 5 has a higher importance than an alert with a severity number of 2.

The currently received alerts are correlated and a corresponding current security ambiance level is deduced. The security policy data may specify that the security ambiance level is expressed by colours: a green level means that everything is OK with no need for any action; an orange level means that a first set of actions has to be done, e.g., that some security-sensitive areas of the network are only accessible with a password from now on or that attack-affected access points are only accessible by network administrators; a red level means that the network is severely endangered and that a set of more severe actions has to done, e.g., that the network is barred for everyone except the network administrator.

An algorithm specified in the security policy data may express that the green level is active if there is no alert, the orange level is active if the maximum severity received is 3, and that the red level is active if at least one alert is of severity 4 or upper. More complex algorithms can be considered, involving, e.g., the number of alerts, the type of alerts, etc. For example, only one alert can activate the process if its severity is higher than a pre-configured threshold while one thousand alerts will not cause any modification if they have all almost the same low severity.

The network node 11 will not react if the calculation of the updated security level gives the result that the security ambiance level stays the same as it was before the calculation. However, the network node 11 will react when the calculation of the updated security level results in a change of the security ambiance level. For example, the calculation leads to the result that the security ambiance level, because of the detected attack 201, changes from the green level to the orange level.

For this special case that the security ambiance level is changed from green to orange, the security policy data may specify that the network hosts that are affected by the attack are contacted by the network node 11 and that the access control parameters of these hosts are modified. Accordingly, the network node 11 determines the hosts of the network 1 that are concerned by this alert and affected by the attack, respectively. The network node 11 may use information contained in the alert message 203 to identify relevant network elements. The network node 11 identifies that the network element 18 is affected by the attack and, in order to avoid identity stealth by the hacker 13, opens a connection 204 to the network element 18.

The network element 18 comprises a ACL with entries specifying access rights to the network 1. For example, that indicate allowed users access control

The deployed ACLs of the network element 18 are modified to only contain minimal right, for the network administrator, for example. By the modification of the access control parameters, i.e., the entries of the ACL, the attack of the hacker is averted from the network 1.

After the network security threat has been abolished, the network operator may, depending of the alerts sent and of his business, decide to modify his configuration of the security policy before reestablishing the normal security ambiance status (green). Thus, the operator may access 205 the network node 11 and close detected leaks in the protective shield of the network. If the network system has come back to a normal state (green), the previous ACLs are restored in the system. The network node accesses 206 the network element 18 and resets the previous ACL entries.

Fig. 3 shows a network node 311 according to the present invention. The network node 311 may a stand-alone network element, e.g., a server dedicated to the access control according to the present invention. It is also possible that the functionality of the network node according to the present invention is implemented into an already existing network element of a network, e.g., a centrally located switch, router or into a similar network element.

The network node 311 comprises an interface 31 for communication 3001 with a entity defining the security policy that is followed by the network node 311 and for communication 3002 with network elements with access control parameters (ACL, other access control methods) and with alerting security agents, e.g. IDS, IPS.

The network node 311 further comprises a control unit 32 with a processor for control of the network node 311 and for computational tasks, e.g., a correlation of alerts, a calculation of an updated security ambiance level, etc.

And the network node 311 comprises a memory unit 33, e.g., a hard disk drive, for storage of security policy data and software, e.g., a computer program product for execution of the describes method according to the invention.

## Claims

1. A method of providing an access control system granting access rights upon resources (15 to 19) within a network (1) to an entity based on access control parameters,
**characterised in**
**that** the method comprises the step of:
modifying, on detection of a change in a security ambiance level of the network (1), in real-time the access control parameters in dependence on the change in the security ambiance level of the network (1).

2. The method of claim 1,
**characterised in**
**that** the method comprises the further step of:
providing security policy data that specify a modification of the access control parameters in dependence on the change in the security ambiance level of the network (1).

3. The method of claim 1,
**characterised in**
**that** the method comprises the further steps of:
receiving one or more alerts (203) regarding a security threat of the network (1);
deducing from the received one or more alerts (203) an updated security ambiance level of the network (1) based on pre-defined security policy data; and
if the updated security ambiance level is above a pre-defined threshold, triggering the modification of the access control parameters.

4. The method of claim 3,
**characterised in**
**that** the method comprises the further steps of:
defining two or more categories for a classification of the one or more alerts (203) with respect to a severity of the one or more alerts (203); classifying the received one or more alerts (203) according to the defined categories; and
according to the pre-defined security policy data, deducing an updated security ambiance level based on a distribution of the one or more alerts (203) in the defined categories.

5. The method of claim 1,
**characterised in**
**that** the method comprises the further steps of:
determining one or more resources (15 to 19) within the network (1) that are affected by the change in the security ambiance level of the network (1);
accessing one or more access control lists related to the affected resources (15 to 19); and
changing in real-time said one or more access control lists to bring the access control lists into conformity with the changed security ambiance level.

6. The method of claim 1,
**characterised in**
**that** the method comprises the further step of:
modifying, according to the change in the security ambiance level of the network (1), in a centralised way in real-time all access control lists of the access control system.

7. The method of claim 1,
**characterised in**
**that** the method comprises the further steps of:
generating, before modification of the access control parameters, a backup of data concerning the current access rights; and
using a backup of data associated with former access rights for restoration of the former access rights when a security ambiance level associated with the former access rights has been reached again.

8. A network node (11, 311) for providing an access control system granting access rights upon resources (15 to 19) within a network (1) to an entity based on access control parameters,
**characterised in**
**that** the network node (11, 311) comprises a control unit (32) adapted to modify, on detection of a change in a security ambiance level of the network (1), in real-time the access control parameters in dependence on the change in the security ambiance level of the network (1).

9. The network node (11, 311) of claim 8,
**characterised in**
**that** the control unit (32) is further adapted to receive one or more alerts (203) regarding a security threat of the network (1) from a network agent (12), in particular an Intrusion Detection System and/or an Intrusion Prevention System.

10. A computer program product for providing an access control system granting access rights upon resources (15 to 19) within a network (1) to an entity based on access control parameters,
**characterised in**
**that** the computer program product, when executed by a network node (11, 311), performs the step of modifying, on detection of a change in a security ambiance level of the network (1), in real-time the access control parameters in dependence on the change in the security ambiance level of the network (1).
